# EUROPÄISCHE PATENTSCHRIFT

(11) **EP 3 896 312 B1**
(45) Veröffentlichungstag und Bekanntmachung des Hinweises auf die Patenterteilung: **12.04.2023**
(21) Anmeldenummer: 21161029.0
(22) Anmeldetag: 05.03.2021
(51) Int. Cl.: F16H 61/00, F16H 57/04

(54) **HYDRAULISCHE ANORDNUNG FÜR EIN FAHRZEUGGETRIEBE**
HYDRAULIC ASSEMBLY FOR A VEHICLE TRANSMISSION
AGENCEMENT HYDRAULIQUE POUR UNE TRANSMISSION DE VÉHICULE

(30) Priorität: 15.04.2020 DE 102020204756
(43) Veröffentlichungstag der Anmeldung: 20.10.2021
(73) Patentinhaber: Deere & Company, Moline, IL 61265 (US)
(72) Erfinder: Billich, Manuel, 68163 Mannheim (DE); Meid, Michael, 68163 Mannheim (DE)
(74) Vertreter: Dehnhardt, Florian Christopher

(56) Entgegenhaltungen:
- KR-A- 20150 014 163
- US-A1- 2012 060 488
- US-A1- 2015 030 472
- US-B2- 9 500 277

## Beschreibung

Die Erfindung betrifft eine hydraulische Anordnung für ein Fahrzeuggetriebe.

Fahrzeuggetriebe benötigen ein Hydraulikmedium (z.B. Öl), um deren Kupplungen in einem hydraulischen Systemkreislauf zu steuern als auch eine ausreichende Schmierung in einem hydraulischen Schmierungskreislauf zu gewährleisten. Beide Kreisläufe haben unterschiedliche hydraulische Anforderungen. Beispielsweise erfordert der Systemkreislauf außerhalb von Schaltvorgängen eine niedrige Flussrate und während der Schaltvorgänge eine hohe Flussrate des Hydraulikmediums. Hingegen benötigt der Schmierungskreislauf vorzugsweise eine kontinuierliche hohe Flussrate bei niedrigem Druck. Das Dokument US 2012/060488 A1 offenbart z.B eine Hydraulische Anordnung für einen hydraulischen Systemkreislauf und einen hydraulischen Schmierungskreislauf.

Der vorliegenden Erfindung liegt die Aufgabe zugrunde, die Effizienz der Arbeitsweise eines hydraulischen Fahrzeuggetriebes zu verbessern.

Diese Aufgabe wird durch eine hydraulische Anordnung mit den Merkmalen des Patentanspruchs 1 gelöst.

Weitere vorteilhafte Ausgestaltungen der erfindungsgemäßen hydraulischen Anordnung gehen aus den Unteransprüchen hervor. Gemäß Patentanspruch 1 weist die hydraulische Anordnung eine hydraulische Pumpe zur Bereitstellung eines Systemdruckes für einen hydraulischen Systemkreislauf und eines Schmierungsdruckes für einen hydraulischen Schmierungskreislauf auf. Der Systemkreislauf dient insbesondere dazu, eine oder mehrere Kupplungen innerhalb des Fahrzeuggetriebes zu steuern bzw. zu betätigen. Der Schmierungskreislauf dient insbesondere einer kontinuierlichen Schmierung des Fahrzeuggetriebes. Zwischen einem Pumpenausgang der Pumpe und den beiden hydraulischen Kreisläufen ist ein Steuerventil hydraulisch angeschlossen. Dabei weist das Steuerventil mindestens zwei unterschiedliche Schaltstellungen auf derart, dass es in Abhängigkeit von seiner Schaltstellung als eine hydraulische Verbindung zwischen der Pumpe und dem Systemkreislauf oder zwischen der Pumpe und dem Schmierungskreislauf wirkt.

Das zwischen unterschiedlichen Schaltstellungen umschaltbare Steuerventil ermöglicht es, dass die Pumpe bedarfsgerecht entweder mit dem Systemkreislauf oder mit dem Schmierungskreislauf hydraulisch verbunden ist. Hierdurch kann das Fahrzeuggetriebe kostengünstig mit einer einzigen Pumpe und gleichzeitig effizient mit geringen Energieverlusten betrieben werden. Außerdem bleibt die technische Komplexität der hydraulischen Anordnung verhältnismäßig gering. Somit ist die technische Voraussetzung geschaffen, dass zwei hydraulische Kreisläufe trotz einer einzigen Pumpe mit einem Effizienzgrad versorgt werden können, wie er ansonsten nur mit zwei bereitgestellten hydraulischen Pumpen erreicht werden kann.

Wie bereits erwähnt, wird die hydraulische Anordnung bei einem Fahrzeuggetriebe eingesetzt. Bei der hydraulischen Pumpe handelt es sich insbesondere um eine Getriebeölpumpe. Das Fahrzeug ist insbesondere ein Nutzfahrzeug wie etwa ein landwirtschaftliches Nutzfahrzeug (z.B. Schlepper, Traktor), ein forstwirtschaftliches Nutzfahrzeug oder eine Baumaschine.

In einer bevorzugten Ausführungsform enthält die hydraulische Anordnung eine Speichereinheit (z.B. Membranspeicher, Akkumulator), welche an den Systemkreislauf angeschlossen ist. Hierdurch kann für den Systemkreislauf über einen längeren Zeitraum hinweg ein Arbeitsdruck oberhalb eines minimalen Arbeitsdruckes aufrechterhalten werden, ohne hierzu die Pumpe zu benötigen. Dies reduziert die Umschaltfrequenz des Steuerventils zwischen seinen Schaltstellungen und unterstützt zusätzlich eine effiziente Arbeitsweise der hydraulischen Anordnung. Analog kann auch an den Schmierungskreislauf eine Speichereinheit angeschlossen sein, um diesen Kreislauf hinsichtlich seines hydraulischen Druckes zu stabilisieren.

Das Steuerventil ändert seine Schaltstellung
- bei Erreichen oder Unterschreiten eines vorbestimmten minimalen Systemdruckes, und
- bei Erreichen oder Überschreiten eines vorbestimmten maximalen Systemdruckes.

Mit den vorbestimmten Werten eines minimalen und maximalen Systemdruckes kann die Effizienz der Pumpe bei der abwechselnden hydraulischen Verbindung mit dem Systemkreislauf und mit dem Schmierungskreislauf weiter verbessert werden.

Für die abwechselnde hydraulische Verbindung der Pumpe mit den beiden hydraulischen Kreisläufen ist das Schaltschema des Steuerventils derart definiert, dass
- das Steuerventil ausgehend von einem sinkenden Systemdruck nach Erreichen oder Unterschreiten des minimalen Systemdruckes eine erste Schaltstellung einnimmt für eine hydraulische Verbindung der Pumpe mit dem Systemkreislauf, und
- das Steuerventil ausgehend von einem steigenden Systemdruck nach Erreichen oder Überschreiten des maximalen Systemdruckes eine zweite Schaltstellung einnimmt für eine hydraulische Verbindung der Pumpe mit dem Schmierungskreislauf.

Vorzugsweise ist das Steuerventil als ein 3/2-Wegeventil mit drei Anschlüssen und zwei Schaltstellungen ausgebildet und kann hierdurch kostengünstig als Standardbauteil bereitgestellt werden.

Vorteilhaft wirkt das Steuerventil in seinen unterschiedlichen Schaltstellungen mit einer Halte-Ventileinheit zusammen. Dabei ist das Steuerventil in seiner zweiten Schaltstellung insbesondere lösbar gehalten bzw. arretiert, indem die Halte-Ventileinheit eine spezifische Schaltposition einnimmt. Für ein technisch einfaches Zusammenwirken mit dem Steuerventil ist die Halte-Ventileinheit in Abhängigkeit von dem Systemdruck ansteuerbar. Hierdurch kann die lösbare Fixierung des Steuerventils in seiner zweiten Schaltstellung automatisch erzielt und auch wieder aufgehoben werden.

In einer bevorzugten Ausführungsform weist die Halte-Ventileinheit mechanische Arretiermittel auf, um das Steuerventil in seiner zweiten Schaltstellung lösbar zu arretieren. Dabei kann das Steuerventil geeignete Gegenmittel aufweisen, welche mit den vorgenannten Arretiermitteln zusammenwirken. Beispielsweise trägt die Halte-Ventileinheit einen Arretiervorsprung, welcher in eine Aussparung eines Arretierauslegers oder Arretierarmes des Steuerventils lösbar eingreift.

In einer weiteren bevorzugten Ausführungsform weist die Halte-Ventileinheit einen ansteuerbaren Elektromagneten auf. Der Elektromagnet wird beispielsweise von einer Steuerelektronik in Abhängigkeit von dem aktuellen Systemdruck angesteuert. Eine mittels des Elektromagneten erzielbare spezifische Schaltposition kann dann technisch stabil das Steuerventil in seiner zweiten Schaltstellung lösbar halten.

Die erfindungsgemäße hydraulische Anordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein hydraulischer Schaltplan mit der hydraulischen Anordnung in einer ersten Ausführungsform,
- Fig. 2: ein hydraulischer Schaltplan mit der hydraulischen Anordnung in einer zweiten Ausführungsform,
- Fig. 3A: ein Diagramm mit einer Druck-Kennlinie des hydraulischen Systemkreislaufes, und
- Fig. 3B: ein Diagramm mit einer Druck-Kennlinie der hydraulischen Pumpe.

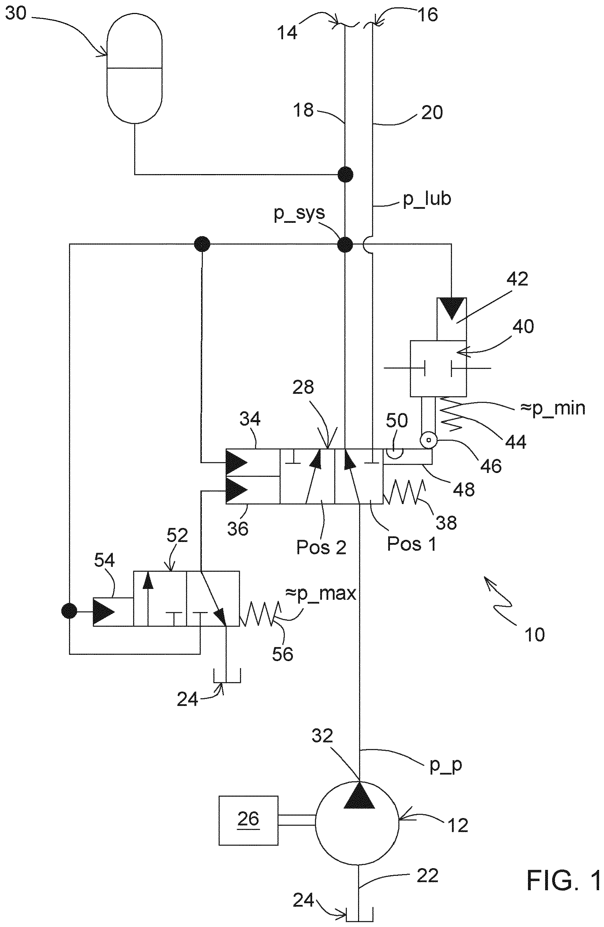

Fig. 1 zeigt eine hydraulische Anordnung 10 für ein hier nicht explizit dargestelltes Fahrzeuggetriebe. Die Anordnung 10 kann teilweise innerhalb und teilweise außerhalb des Fahrzeuggetriebes oder auch vollständig innerhalb des Fahrzeuggetriebes angeordnet sein.

Die Anordnung 10 enthält eine hydraulische Pumpe 12 zum Fördern eines Hydraulikmediums (z.B. Öl) in Richtung eines hydraulischen Systemkreislaufes 14 und eines Schmierungskreislaufes 16. Der Systemkreislauf 14 ist mit einer Systemleitung 18 angedeutet und führt zu mindestens einer Kupplung des Fahrzeuggetriebes und gegebenenfalls weiteren Bauteilen des Systemkreislaufes 14. Der Schmierungskreislauf 16 ist mit einer Schmierungsleitung 20 angedeutet und dient einer kontinuierlichen Schmierung der relevanten Bauteile des Fahrzeuggetriebes.

Die Pumpe 12 ist mit einer Saugleitung 22 an einen das Hydraulikmedium enthaltenden Hydraulikbehälter 24 bzw. Sumpf angeschlossen.

Beispielsgemäß weist die mittels einer Antriebseinheit 26 angetriebene Pumpe 12 ein festes Verdrängungsvolumen auf. Alternativ kann es sich bei der Pumpe 12 jedoch auch um eine Verschwenkpumpe handeln, sodass einzelne Betriebsparameter (z.B. Drehzahl, Flussrate, Pumpendruck p_p) der Pumpe 12 in Abhängigkeit des aktuell zu versorgenden hydraulischen Kreislaufes 14 oder 16 selbsttätig nachgeregelt werden. Der Pumpenbetrieb wird dann bedarfsgerecht und effizienzsteigernd an die hydraulischen Erfordernisse des Systemkreislaufes und des Schmierungskreislaufes angepasst.

Zur Druckstabilisierung ist an den Systemkreislauf 14 eine Speichereinheit 30 (z.B. Membranspeicher, Akkumulator) hydraulisch angeschlossen. Optional ist auch an den Schmierungskreislauf 16 eine (hier nicht dargestellte) Speichereinheit hydraulisch angeschlossen.

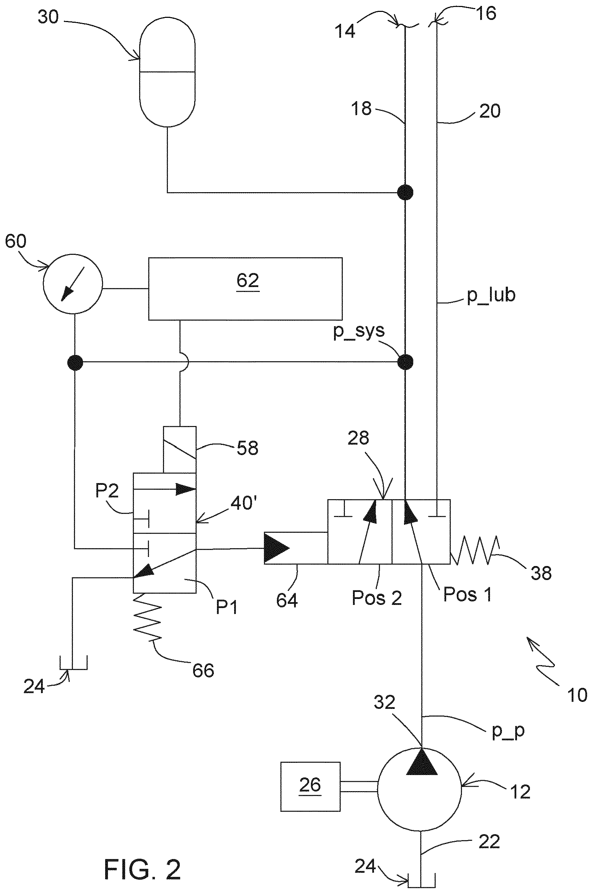

Das Steuerventil 28 ist zwischen einem Pumpenausgang 32 der Pumpe 12 und den beiden hydraulischen Kreisläufen 14, 16 angeschlossen. In der Ausgangsstellung des Steuerventils 28 gemäß Schaltstellung Pos1 (Fig. 1, Fig. 2) wird das Hydraulikmedium vollständig zu dem Systemkreislauf 14 gefördert. In der Schaltstellung Pos2 des Steuerventils 28 fördert die Pumpe 12 das Hydraulikmedium vollständig zu dem Schmierungskreislauf 16.

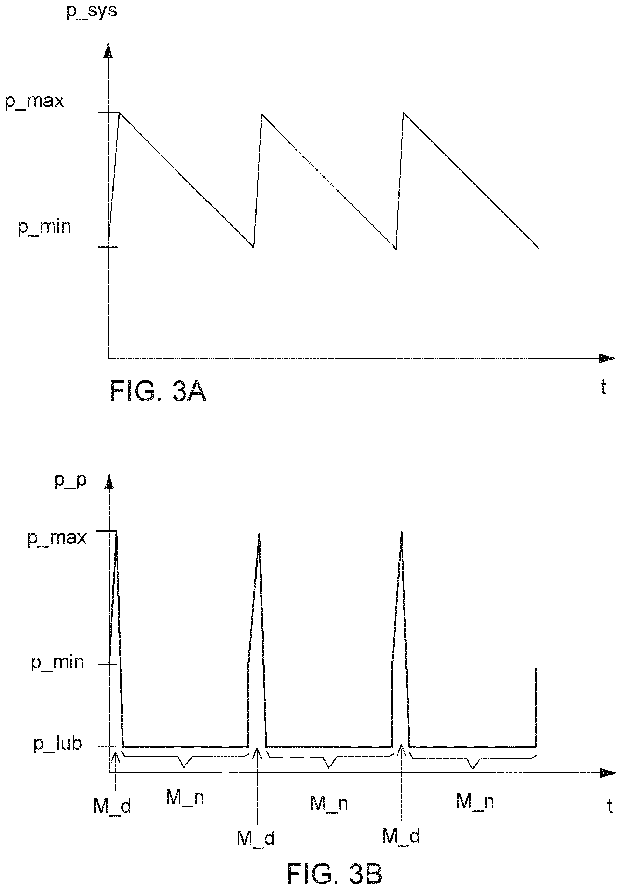

Der Systemdruck p_sys hat einen Bereich von einem vorbestimmten minimalen Systemdruck p_min bis zu einem vorbestimmten maximalen Systemdruck p_max. Dieser Bereich ist in Fig. 3A erkennbar. Damit der Systemdruck p_sys diesen Bereich einhält, ändert sich die Schaltstellung des Steuerventils 28 bei Erreichen oder Unterschreiten des vorbestimmten minimalen Systemdruckes p_min und bei Erreichen oder Überschreiten des vorbestimmten maximalen Systemdruckes p_max.

Dabei wird das Steuerventil 28 ausgehend von einem sinkenden Systemdruck p_sys nach Erreichen oder Unterschreiten des minimalen Systemdruckes p_min in seine erste Schaltstellung Pos1 umgeschaltet für eine hydraulische Verbindung der Pumpe 12 mit dem Systemkreislauf 14. Das Hydraulikmedium wird dann vollständig zur Speichereinheit 30 und zum Systemkreislauf 14 gepumpt, bis bei steigendem Systemdruck p_sys der maximale Systemdruck p_max erreicht ist. Nach Erreichen oder Überschreiten des maximalen Systemdruckes p_max nimmt das Steuerventil 28 seine zweite Schaltstellung Pos2 ein für eine hydraulische Verbindung der Pumpe 12 mit dem Schmierungskreislauf 16.

Bei beiden Ausführungsformen gemäß Fig. 1 und Fig. 2 ist das Steuerventil 28 als ein 3/2-Wegeventil mit drei Anschlüssen und zwei Schaltstellungen Posi, Pos2 ausgebildet. Dennoch ist das Steuerventil 28 in Fig. 1 und Fig. 2 unterschiedlich ansteuerbar und dementsprechend unterschiedlich ausgestaltet, um das oben beschriebene Schaltschema zu realisieren.

Das Steuerventil 28 gemäß Fig. 1 weist einen ersten und zweiten Steuereingang 34, 36 auf, deren hydraulische Steuerdrücke gegen eine Rückstellfeder 38 wirken.

In der Schaltstellung Pos2 wird das Steuerventil 28 mittels einer Halte-Ventileinheit 40 lösbar gehalten, bis der minimale Systemdruck p_min unterschritten ist. Zu diesem Zweck weist die Halte-Ventileinheit 40 einen Steuereingang 42 auf, an dem der aktuelle Systemdruck p_sys anliegt. Gegen den Druck am Steuereingang 42 wirkt der Federdruck einer Rückstellfeder 44. Dieser Federdruck ist etwa auf den minimalen Systemdruck p_min eingestellt. Sobald der steigende aktuelle Systemdruck p_sys den Federdruck der Rückstellfeder 44 bzw. den minimalen Systemdruck p_min erreicht oder überschreitet, drückt ein Arretiervorsprung 46 der Halte-Ventileinheit 40 gegen einen Arretierarm 48 des Steuerventils 28. Erst wenn das Steuerventil 28 in seine zweite Schaltstellung Pos2 überführt wird, verrastet der Arretiervorsprung 46 mit dem Arretierarm 48. Dabei rastet der Arretiervorsprung 46 beispielsweise in eine Aussparung 50 des Arretierarmes 48 ein.

Die mechanischen Arretiermittel 46, 48, 50 bewirken eine lösbare Arretierung des Steuerventils 28 in seiner zweiten Schaltstellung Pos2, bis der aktuelle Systemdruck p_sys unterhalb des minimalen Systemdruckes p_min fällt. In dieser Situation wird die Arretierung des Steuerventils 28 gelöst, so dass das Steuerventil 28 mittels des geeignet dimensionierten Federdrucks seiner Rückstellfeder 38 wieder in seine erste Schaltstellung Pos1 überführt wird, um den aktuellen Systemdruck p_sys bis zu dem vorbestimmten maximalen Systemdruck p_max aufzuladen.

Damit das Steuerventil 28 ausgehend von seiner ersten Schaltstellung Pos1 in seine zweite Schaltstellung Pos2 umgeschaltet wird, ist eine weitere Ventileinheit in Form eines Hochdruck-Ventils 52 vorgesehen. Es ist als ein 3/2- Wegeventil mit drei Anschlüssen und zwei Schaltstellungen ausgebildet. An dessen Steuereingang 54 liegt der aktuelle Systemdruck p_sys an. Der Steuereingang 54 wirkt gegen den Federdruck einer Rückstellfeder 56. Dieser Federdruck ist etwa auf den maximalen Systemdruck p_max eingestellt.

Sobald der steigende aktuelle Systemdruck p_sys den maximalen Systemdruck p_max erreicht oder überschreitet, wird das Hochdruck-Ventil 52 von seiner in Fig. 1 dargestellten Ausgangsstellung in seine zweite Schaltstellung umgeschaltet, so dass der maximale Systemdruck p_max auch an dem zweiten Steuereingang 36 des Steuerventils 28 anliegt. Hierdurch wird das Steuerventil 28 bei einem aktuellen Systemdruck p_sys, der etwa dem maximalen Systemdruck p_max entspricht, automatisch in seine zweite Schaltstellung Pos2 umgeschaltet. Der daraufhin wieder sinkende aktuelle Systemdruck p_sys führt dazu, dass das Hochdruck-Ventil 52 wieder in seine in Fig. 1 dargestellte Ausgangsstellung zurückgeschaltet wird. In dieser Situation ist der zweite Steuereingang 36 wieder mit dem Hydraulikbehälter 24 hydraulisch verbunden. Gleichzeitig bleibt das Steuerventil 28 aufgrund der vorbeschriebenen Arretiermittel 46, 48, 50 in seiner zweiten Schaltstellung Pos2 lösbar gehalten bzw. arretiert.

Entgegen der Darstellung in Fig. 1 sind die mechanischen Arretiermittel 46, 48, 50 in das Steuerventil 28 baulich integriert und als im Steuerventil 28 koaxial ausgebildete Sperre mit Kugel-Nut-Kontakt ausgebildet.

In Fig. 1 weist die Halte-Ventileinheit 40 mechanische Arretiermittel 46 zur lösbaren Aufrechterhaltung der zweiten Schaltstellung Pos2 des Steuerventils 28 auf. In Fig. 2 hingegen weist eine Halte-Ventileinheit 40' elektronische Mittel in Form eines Elektromagneten 58 auf, um das Steuerventil 28 in seiner zweiten Schaltstellung Pos2 lösbar zu halten bzw. zu arretieren.

Die Anordnung 10 gemäß Fig. 2 weist einen Druckwandler 60 auf, welcher an den aktuellen Systemdruck p_sys und an eine geeignete Steuerelektronik 62 angeschlossen ist. Die Steuerelektronik 62 steuert den Elektromagneten 58 an und beaufschlagt ihn in Abhängigkeit von dem aktuellen Systemdruck p_sys. Der Elektromagnet 58 schaltet die Halte-Ventileinheit 40', welche als ein 3/2-Wegeventil mit drei Anschlüssen und zwei Schaltstellungen ausgebildet ist.

Die Steuerelektronik 62 ist derart ausgelegt, dass sie den Elektromagneten 58 beaufschlagt bzw. aktiviert, sobald der ansteigende aktuelle Systemdruck p_sys den maximalen Systemdruck p_max erreicht oder überschreitet. Hierdurch wird die Halte-Ventileinheit 40' in ihre Schaltposition P2 überführt. Folglich überführt der maximale Systemdruck p_max über einen Steuereingang 64 des Steuerventils 28 letzteres gegen den Federdruck der Rückstellfeder 38 in die zweite Schaltstellung Pos2. Sobald der sinkende aktuelle Systemdruck p_sys den minimalen Systemdruck p_min erreicht oder unterschreitet, deaktiviert die Steuerelektronik 62 den Elektromagneten 58. Hierdurch wird die Halte-Ventileinheit 40' durch die Rückstellfeder 66 automatisch in ihre Ausgangsstellung gemäß Schaltposition P1 zurückgeschaltet. Folglich wird das Steuerventil 28 durch seine Rückstellfeder 38 automatisch in seine erste Schaltstellung Pos1 zurückgeschaltet.

Bei beiden Ausführungsformen gemäß Fig. 1 und Fig. 2 ergibt sich das in Fig. 3A dargestellte Systemverhalten des Systemkreislaufes 14. Zwischen dem maximalen Systemdruck p_max und dem minimalen Systemdruck p_min zeigt der Systemdruck p_sys einen sägezahnartigen Verlauf. Um den Systemdruck p_sys auf den maximalen Systemdruck p_max zu bringen, befindet sich die Pumpe 12 für einen kurzen Zeitabschnitt in einem Ladedruckmodus M_d und ansonsten in einem normalen Betriebsmodus M_n. Im Betriebsmodus M_n treibt die Antriebseinheit 26 die Pumpe 12 derart an, dass letztere lediglich den verhältnismäßig niedrigen Schmierungsdruck p_lub aufrechterhalten muss. Diese Lösung verleiht der hydraulischen Anordnung 10 eine ähnliche Effizienz, wie sie bei einer technisch komplexeren und kostenaufwändigeren Lösung mit zwei Pumpen erreichbar ist.

Es sei darauf hingewiesen, dass die in den Zeichnungen offenbarten Details teilweise schematisch und nicht notwendigerweise maßstabsgetreu dargestellt sind.

## Patentansprüche

1. Hydraulische Anordnung (10) für ein Fahrzeuggetriebe umfassende einen hydraulischen Systemkreislauf (14) und einen hydraulischen Schmierungskreislauf (16) und mit einer von einer Antriebseinheit (26) angetriebenen hydraulischen Pumpe (12) zur Bereitstellung eines Systemdruckes (p_sys) in dem hydraulischen Systemkreislauf (14) und eines Schmierungsdruckes (p_lub) in dem hydraulischen Schmierungskreislauf (16), und mit einem Steuerventil (28), welches zwischen einem Pumpenausgang (32) der Pumpe (12) und den beiden hydraulischen Kreisläufen (14, 16) angeschlossen ist und zwei unterschiedliche Schaltstellungen (Posi, Pos2) aufweist derart, dass das Steuerventil (28) in Abhängigkeit von seiner Schaltstellung (Posi, Pos2) als eine hydraulische Verbindung zwischen der Pumpe (12) und dem Systemkreislauf (14) oder zwischen der Pumpe (12) und dem Schmierungskreislauf (16) wirkt, **dadurch gekennzeichnet dass** das Steuerventil (28) unter Änderung seiner Schaltstellung ausgehend von einem sinkenden Systemdruck (p_sys) nach Erreichen oder Unterschreiten eines vorbestimmten minimalen Systemdruckes (p_min) eine erste Schaltstellung (Pos1) einnimmt für eine hydraulische Verbindung der Pumpe (12) mit dem Systemkreislauf (14) in einem Ladedruckmodus (M_d), und ausgehend von einem steigenden Systemdruck (p_sys) nach Erreichen oder Überschreiten eines vorbestimmten maximalen Systemdruckes (p_max) eine zweite Schaltstellung (Pos2) einnimmt für eine hydraulische Verbindung der Pumpe (12) mit dem Schmierungskreislauf (16) in einem normalen Betriebsmodus (M_n), wobei die Antriebseinheit (26) die Pumpe (12) im normalen Betriebsmodus (M_n) derart antreibt, dass diese lediglich den Schmierungsdruck (p_lub) aufrechterhält.

2. Anordnung nach Anspruch 1, **dadurch gekennzeichnet, dass** an den Systemkreislauf (14) eine Speichereinheit (30) hydraulisch angeschlossen ist.

3. Anordnung nach einem der Ansprüche 1 oder 2, **dadurch gekennzeichnet, dass** das Steuerventil (28) als ein 3/2-Wegeventil ausgebildet ist.

4. Anordnung nach wenigstens einem der vorhergehenden Ansprüche, **dadurch gekennzeichnet, dass** das Steuerventil (28) in seiner zweiten Schaltstellung (Pos2) durch eine Halte-Ventileinheit (40, 40') lösbar gehalten ist, welche in Abhängigkeit von dem Systemdruck (p_sys) ansteuerbar ist.

5. Anordnung nach Anspruch 4, **dadurch gekennzeichnet, dass** die Halte-Ventileinheit (40) mechanische Arretiermittel (46) zur lösbaren Arretierung des Steuerventils (28) in seiner zweiten Schaltstellung (Pos2) umfasst.

6. Anordnung nach Anspruch 4, **dadurch gekennzeichnet, dass** die Halte-Ventileinheit (40') einen ansteuerbaren Elektromagneten (58) zur lösbaren Aufrechterhaltung der zweiten Schaltstellung (Pos2) des Steuerventils (28) umfasst.

## Claims

1. Hydraulic arrangement (10) for a vehicle transmission, comprising a hydraulic system circuit (14) and a hydraulic lubrication circuit (16) and having a hydraulic pump (12), driven by a drive unit (26), for providing a system pressure (p_sys) in the hydraulic system circuit (14) and a lubrication pressure (p_lub) in the hydraulic lubrication circuit (16), and having a control valve (28) that is connected between a pump outlet (32) of the pump (12) and the two hydraulic circuits (14, 16) and has two different switching positions (Posi, Pos2) such that the control valve (28), depending on its switching position (Posi, Pos2), acts as a hydraulic connection between the pump (12) and the system circuit (14) or between the pump (12) and the lubrication circuit (16), **characterized in that** the control valve (28), changing its switching position, based on a falling system pressure (p_sys) after it reaches or drops below a predetermined minimum system pressure (p_min), takes up a first switching position (Pos1) for a hydraulic connection of the pump (12) to the system circuit (14) in a boost pressure mode (M_d), and based on a rising system pressure (p_sys) after it reaches or exceeds a predetermined maximum system pressure (p_max), takes up a second switching position (Pos2) for a hydraulic connection of the pump (12) to the lubrication circuit (16) in a normal operating mode (M_n), wherein the drive unit (26) drives the pump (12) in the normal operating mode (M_n) such that the latter maintains only the lubrication pressure (p_lub).

2. Arrangement according to Claim 1, **characterized in that** a storage unit (30) is hydraulically connected to the system circuit (14).

3. Arrangement according to either of Claims 1 and 2, **characterized in that** the control valve (28) is in the form of a 3/2-way valve.

4. Arrangement according to at least one of the preceding claims, **characterized in that** the control valve (28) is held releasably in its second switching position (Pos2) by a holding valve unit (40, 40'), which is actuable depending on the system pressure (p_sys).

5. Arrangement according to Claim 4, **characterized in that** the holding valve unit (40) comprises mechanical locking means (46) for releasably locking the control valve (28) in its second switching position (Pos2).

6. Arrangement according to Claim 4, **characterized in that** the holding valve unit (40') comprises an actuable electromagnet (58) for releasably maintaining the second switching position (Pos2) of the control valve (28).

## Revendications

1. Agencement hydraulique (10) pour une transmission de véhicule comprenant un circuit de système hydraulique (14) et un circuit de lubrification hydraulique (16) et avec une pompe hydraulique (12) entraînée par une unité d'entraînement (26) pour fournir une pression de système (p_sys) dans le circuit de système hydraulique (14) et une pression de lubrification (p_lub) dans le circuit de lubrification hydraulique (16), et avec une soupape de commande (28) qui est raccordée entre une sortie de pompe (32) de la pompe (12) et les deux circuits hydrauliques (14, 16) et qui présente deux positions de commutation différentes (Pos1, Pos2) de telle sorte que la soupape de commande (28), en fonction de sa position de commutation (Pos1, Pos2), agit comme une liaison hydraulique entre la pompe (12) et le circuit de système (14) ou entre la pompe (12) et le circuit de lubrification (16), **caractérisé en ce que** la soupape de commande (28), en changeant sa position de commutation, en partant d'une pression de système (p_sys) décroissante, après avoir atteint ou être passée en dessous d'une pression de système minimale prédéterminée (p_min), occupe une première position de commutation (Pos1) pour une liaison hydraulique de la pompe (12) avec le circuit de système (14) dans un mode de pression de charge (M_d) et, en partant d'une pression de système (p_sys) croissante, après avoir atteint ou dépassé une pression de système maximale prédéterminée (p_max), occupe une deuxième position de commutation (Pos2) pour une liaison hydraulique de la pompe (12) avec le circuit de lubrification (16) dans un mode de fonctionnement normal (M_n), l'unité d'entraînement (26) entraînant la pompe (12) dans le mode de fonctionnement normal (M_n) de telle sorte que celle-ci maintient uniquement la pression de lubrification (p_lub).

2. Agencement selon la revendication 1, **caractérisé en ce qu'**une unité d'accumulation (30) est raccordée hydrauliquement au circuit de système (14).

3. Agencement selon l'une quelconque des revendications 1 ou 2, **caractérisé en ce que** la soupape de commande (28) est configurée sous la forme d'une soupape à 3/2 voies.

4. Agencement selon au moins l'une quelconque des revendications précédentes, **caractérisé en ce que** la soupape de commande (28) est maintenue de manière amovible dans sa deuxième position de commutation (Pos2) par une unité de soupape de maintien (40, 40') qui peut être commandée en fonction de la pression de système (p_sys).

5. Agencement selon la revendication 4, **caractérisé en ce que** l'unité de soupape de maintien (40) comprend des moyens de blocage mécaniques (46) pour bloquer de manière amovible la soupape de commande (28) dans sa deuxième position de commutation (Pos2).

6. Agencement selon la revendication 4, **caractérisé en ce que** l'unité de soupape de maintien (40') comprend un électroaimant (58) pouvant être commandé pour maintenir de manière amovible la deuxième position de commutation (Pos2) de la soupape de commande (28).
